# FASCICULE DE BREVET EUROPEEN

(11) **EP 3 692 585 B1**
(45) Date de publication et mention de la délivrance du brevet: **01.11.2023**
(21) Numéro de dépôt: 18778925.0
(22) Date de dépôt: 01.10.2018
(51) Int. Cl.: H01M 10/0569, H01M 4/62, H01M 10/0568, H01M 50/409, H01M 10/0525

(54) **ELEMENT ELECTROCHIMIQUE LITHIUM ION FONCTIONNANT A HAUTE TEMPERATURE**
ELEKTROCHEMISCHES LITHIUM-IONEN-ELEMENT MIT BETRIEB BEI HOHER TEMPERATUR
LITHIUM ION ELECTROCHEMICAL ELEMENT OPERATING AT A HIGH TEMPERATURE

(30) Priorité: 02.10.2017 FR 1759169
(43) Date de publication de la demande: 12.08.2020
(73) Titulaire: SAFT, 92300 Lavallois-Perret (FR)
(72) Inventeur: DUMONT, Erwan, 33440 Ambares et Lagrave (FR); CASTAING, Frédéric, 33170 Gradignan (FR); LE GUERN, Benjamin, 86340 Les Roches Premarie (FR); RENE, Fabrice, 86190 Chire en Montreuil (FR); ULLDEMOLINS, Michel, 33300 Bordeaux (FR); TESSIER, Cécile, 33520 Bruges (FR); PERES, Jean-Paul, 86340 Nouaille Maupertuis (FR); FISCHER, Florent, 33520 Bruges (FR)
(74) Mandataire: Hirsch & Associés
(86) Numéro de dépôt international: PCT/EP2018/076674
(87) Numéro de publication internationale: WO 2019/068653

(56) Documents cités:
- US-A1- 2010 209 783
- US-A1- 2014 004 412
- US-A1- 2015 140 449

## Description

### DOMAINE TECHNIQUE

Le domaine technique de l'invention est celui des éléments électrochimiques rechargeables de type lithium-ion capables de fonctionner à haute température, c'est-à-dire à une température supérieure ou égale à 150°C, sans qu'une dégradation significative de leurs performances électriques ne soit observée.

### ETAT DE LA TECHNIQUE

Des éléments électrochimiques rechargeables de type lithium-ion sont connus de l'état de la technique. En raison de leur densité d'énergie massique et volumique élevées, ils constituent une source d'énergie électrique prometteuse. Ils comportent au moins une électrode positive, qui peut être un oxyde lithié de métal de transition, et au moins une électrode négative qui peut être à base de graphite. De tels éléments présentent néanmoins une durée de vie limitée lorsqu'ils sont utilisés à une température d'au moins 150°C car à cette température, leurs constituants se dégradent rapidement entrainant soit une mise en court-circuit de l'élément, soit une hausse de sa résistance interne. On observe en effet sur des éléments ne rentrant pas en court-circuit à 150°C, qu'après environ cinq cycles de charge/décharge menés à 150°C, la capacité restituée ne représente plus qu'environ 20% de leur capacité initiale. Après dix cycles de charge/décharge, la capacité restituée est inférieure à 10%. Il semble que la température de 125°C constitue la limite au-delà de laquelle, on observe une dégradation rapide des performances électriques d'un élément électrochimique rechargeable de type lithium-ion. Des éléments électrochimiques comprenant une électrode à base de lithium sont certes susceptibles de fonctionner à des températures supérieures ou égales à 150°C, mais il s'agit d'éléments électrochimiques non rechargeables, encore appelés éléments électrochimiques primaires ou piles, qui sont exclus de la portée de la présente invention.

Des recherches ont été menées pour mettre au point des éléments électrochimiques rechargeables de type lithium-ion capables de fonctionner à haute température. De tels éléments sont par exemple décrits dans le document EP-A-1 619 741. Celui-ci enseigne l'utilisation d'un matériau actif positif à base de LiNiO₂, de préférence obtenu par substitution dans LiNiO₂ d'une partie du nickel par du cobalt et/ou par de l'aluminium. Le sel utilisé dans l'électrolyte de l'élément électrochimique est un sel de lithium choisi parmi : LiPF₆, LiBF₄, LiBOB (lithium bis oxalatoborate), LiBETI (lithium bisperfluoroethylsulfonylimide) ou un mélange de ceux-ci. Il est dit que cet élément est capable de fonctionner à une température comprise entre 60°C et 180°C.

De plus, on cherche un moyen d'augmenter le grammage d'une électrode d'un élément électrochimique lithium-ion. En effet, les matières électrochimiquement actives positive et négative d'un élément électrochimique lithium-ion sont généralement mélangées à un ou plusieurs composés ayant la fonction de liant, ainsi qu'à un ou plusieurs composés ayant des propriétés de conduction électrique élevée. Le mélange contenant la matière active positive (respectivement négative), le ou les liant(s) ainsi que le ou les composés ayant des propriétés de conduction électrique élevée, est déposé sur le collecteur de courant de l'électrode positive (respectivement négative). La masse de mélange déposée par unité de surface du collecteur de courant est dénommée grammage de l'électrode. Une augmentation du grammage de l'électrode positive ou négative entraine une augmentation de la capacité de l'élément électrochimique. <insérer page 2a>

Un premier objectif de l'invention est donc de mettre à disposition de nouveaux éléments électrochimiques de type lithium-ion capables de fonctionner en charge et en décharge à une température d'au moins 150°C et dont les électrodes présentent un grammage élevé.

Un second objectif de l'invention est de pouvoir fabriquer lesdits éléments dans un format cylindrique.

### RESUME DE L'INVENTION

Le premier objectif est atteint par la mise à disposition d'un élément électrochimique lithium-ion comprenant :
- au moins une électrode négative comprenant une matière active présentant un potentiel de fonctionnement supérieur ou égal à 1V par rapport au potentiel du couple électrochimique Li⁺/Li ;
- au moins une électrode positive ;
- l'électrode négative et/ou l'électrode positive comprenant un liant choisi parmi le polytétrafluoroéthylène, le polyamideimide, le polyimide, le caoutchouc styrène-butadiène et l'alcool polyvinylique ou un mélange de ceux-ci ;
- un électrolyte liquide comprenant un solvant dont au moins 90% du volume est un liquide ionique dont l'anion est choisi parmi le tétrafluoroborate BF₄⁻, l'hexafluorophosphate PF₆⁻, l'hexafluoroarséniate AsF₆⁻, le bis(trifluorométhylsulfonyl)imide (TFSI) (CF₃SO₂)₂N⁻, le bis(pentafluoroéthylsulfonyl)imide (CF₃CF₂SO₂)₂N⁻, le tris(pentafluoroéthyl)trifluorophosphate (C₂F₅)₃PF₃⁻ (FAP) et le trifluorométhanesulfonate (triflate) CF₃SO₃⁻;
- un séparateur présentant un rétreint inférieur ou égal à 3% dans le sens de sa longueur et dans le sens de sa largeur, après exposition à une température de 200°C d'une durée d'au moins une heure.

L'élément électrochimique objet de l'invention est capable de fonctionner en charge et en décharge sur une large plage de température, c'est-à-dire depuis la température ambiante (environ 25°C) à une température d'au moins 150°C. L'expression « capable de fonctionner à une température d'au moins 150°C » signifie que l'élément électrochimique peut être utilisé pendant au moins 200 heures à une température de 150°C sans observer une perte de capacité supérieure à 30 % de sa capacité initiale.

US 2015/140449 décrit au Tableau 1 la préparation d'un élément électrochimique comprenant LiFePO₄ comme matière active positive et du graphite comme matière active négative. L'électrode négative utilise du caoutchouc styrène-butadiène comme liant. Différents électrolytes de type liquide ionique sont utilisés conjointement à un séparateur en fibres de verre. Le lithium est également utilisé en tant que matière active négative au Tableau 2. Toutefois, ce document ne décrit pas de matière active négative présentant un potentiel de fonctionnement supérieur ou égal à 1 V par rapport au potentiel du couple électrochimique Li⁺/Li.

US 2014/004412 décrit la préparation d'un élément électrochimique comprenant du lithium métallique comme matière active positive et du silicium comme matière active négative. L'électrode négative utilise une polyimide comme liant. L'électrolyte comprend un liquide ionique qui est du 1-methyl-1-propylpyrrolidinium bis(fluorosulfonyl) amide (P13-FSA) et un sel qui est le bis(trifluoromethylsulfonyl)amide de lithium (LiTFSA). Le séparateur est en fibres de verre. Il est mentionné que d'autres matières actives négatives ayant un potentiel de fonctionnement supérieur ou égal à 1 V par rapport au potentiel du couple électrochimique Li⁺/Li sont utilisables.

US 2010/209783 décrit la préparation d'un élément électrochimique comprenant du LiNi_{0,5}Co_{0,15},Al_{0,05}O₂ comme matière active positive et du graphite comme matière active négative. L'électrode négative utilise une polyimide comme liant. L'électrolyte est un liquide ionique et le séparateur est du PET recouvert d'alumine. Ce document mentionne en outre que les matières actives négatives comprennent des matériaux pouvant intercaler le lithium et que les matières actives positives comprennent des oxydes de métaux de transition comme le LiCoO₂, LiNiO₂, LiMnO₂, LiMn₂O₄, LiFePO₄ ou leurs dérivés substitués par d'autres métaux de transition.

La composition particulière de liant utilisée pour l'électrode positive et/ou l'électrode négative est compatible avec une utilisation de l'élément lithium-ion à une température d'au moins 150°C. Elle permet également d'obtenir un grammage d'électrode élevé.

Selon un mode de réalisation, le séparateur présente en outre la propriété de pouvoir être enroulé autour d'un cylindre d'un diamètre supérieur ou égal à 3 mm sans qu'une déchirure du séparateur ne soit observée.

Selon un mode de réalisation, la matière active présentant un potentiel de fonctionnement supérieur ou égal à 1V par rapport au potentiel du couple électrochimique Li⁺/Li est choisie dans le groupe consistant en :
a) LiₐTi_{b}O₄ où 0,5≤a≤3 et 1≤b≤2,5 ;
b) LiₓMg_{y}Ti_{z}O₄ où x>0 ; 0,01≤y≤0.20 ; z>0 ; 0,01≤y/z≤0,10 et 0,5<(x+y)/z ≤1,0;
c) Li_{4+y}Ti_{5-d}M²_{d}O₁₂ où M² est au moins un élément choisi dans le groupe consistant en Mg, Al, Si, Ti, Zn, Zr, Ca, W, Nb, et Sn, avec -1≤y≤3,5 et 0≤d≤0,1 ;
d) H₂Ti₆O₁₃ ;
e) H₂Ti₁₂O₂₅ ;
f) TiO₂ ;
g) LiₓTiNb_{y}O_{z} où 0≤x≤5 ; 1≤y≤24 ; 7≤z≤ 62 ;
h) LiₐTiM_{b}Nb_{c}O_{7+σ} où 0≤a≤5 ; 0≤b≤0,3 ; 0≤c≤10 ; -0,3≤σ≤0,3 et M est au moins un élément choisi dans le groupe consistant en Fe, V, Mo et Ta ;
i) Nb_{α}Ti_{β}O_{7+γ} où 0≤α≤24 ; 0≤β≤ 1 ; -0,3≤γ≤ 0,3 ;
et les mélanges de ceux-ci.

De préférence, la matière active présentant un potentiel de fonctionnement supérieur ou égal à 1V par rapport au potentiel du couple électrochimique Li⁺/Li est Li₄Ti₅O₁₂.

Selon un mode de réalisation, la matière active présentant un potentiel de fonctionnement supérieur ou égal à 1V par rapport au potentiel du couple électrochimique Li⁺/Li, possède un revêtement à base de carbone.

Selon un mode de réalisation, le séparateur est choisi dans le groupe consistant en :
- un séparateur à base de polyester,
- un séparateur à base de fibres de verre liées entre elles par un polymère,
- un séparateur à base de polyimide,
- un séparateur à base de polyamide,
- un séparateur à base de polyamideimide,
- un séparateur à base de polyaramide, et
- un séparateur à base de cellulose.

Selon un mode de réalisation, le séparateur contient ou est revêtu d'un matériau choisi dans le groupe consistant en un oxyde métallique, un carbure, un nitrure, un borure, un siliciure et un sulfure.

Selon un mode de réalisation, le liquide ionique est choisi dans le groupe consistant en :
- le 1-butyl 1-méthyl pyrrolidinium bis(trifluorométhylsulfonyl)imide (BMP-TFSI),
- le 1-butyl 1-méthyl pyrrolidinium tris(pentafluoroéthyl)trifluorophosphate (BMP-FAP),
- l'éthyl-(2-méthoxyéthyl) diméthyl ammonium bis(trifluorométhylsulfonyl)imide,
- le 1-méthyl 1-propyl piperidinium bis(trifluorométhylsulfonyl)imide.

Selon un mode de réalisation, l'élément électrochimique comprend un sel de lithium dissous dans le liquide ionique, lequel sel est choisi dans le groupe consistant en :
- l'hexafluorophosphate de lithium LiPF₆,
- le tris(pentafluoroethyl)trifluorophosphate de lithium LiFAP,
- le bisoxalatoborate de lithium LiBOB,
- l'hexafluoroarsénate de lithium LiAsF₆,
- le tétrafluoroborate de lithium LiBF₄,
- le trifluorométhanesulfonate de lithium LiCF₃SO₃,
- le trifluorométhane sulfonimide de lithium LiN(CF₃SO₂)₂ (LiTFSI) et le trifluorométhanesulfoneméthide de lithium LiC(CF₃SO₂)₃ (LiTFSM), de préférence LiTFSI.

Selon un mode de réalisation, l'électrode négative et/ou l'électrode positive comprend un collecteur de courant qui est une grille métallique. L'utilisation d'un collecteur de courant présentant la forme d'une grille dans l'électrode positive et/ou l'électrode négative de l'élément électrochimique décrit ci-avant permet d'augmenter encore davantage le grammage de l'électrode. L'utilisation d'un tel collecteur de courant permet de porter le grammage de l'électrode à une valeur d'au moins 20 mg de mélange par cm² de surface de collecteur de courant et par face, alors que les valeurs conventionnelles de grammage observées pour un élément électrochimique lithium-ion sont généralement dans la plage allant de 6 à 13 mg de mélange par cm² de surface de collecteur de courant et par face.

Le métal de la grille peut être de l'aluminium ou un alliage à base d'aluminium.

Selon un mode de réalisation, la grille présente une épaisseur inférieure ou égale à 500 µm, de préférence inférieure ou égale à 300 µm.

Selon un mode de réalisation, l'élément électrochimique comprend au moins une électrode positive comprenant une matière active choisie dans le groupe consistant en :
- composé **i)** de formule LiₓMn_{1-y-z}M'_{y}M"_{z}PO₄ (LMP), où M'et M" sont différents l'un de l'autre et sont choisis dans le groupe consistant en B, Mg, Al, Si, Ca, Ti, V, Cr, Fe, Co, Ni, Cu, Zn, Y, Zr, Nb et Mo, avec 0,8≤x≤1,2 ; 0≤y≤0,6 ; 0≤z≤0,2 ;
- un composé **ii)** de formule LiₓFe_{1-y}M_{y}PO₄ (LFMP) où M est choisi dans le groupe consistant en B, Mg, Al, Si, Ca, Ti, V, Cr, Mn, Co, Ni, Cu, Zn, Y, Zr, Nb et Mo; et 0,8≤x≤1,2 ; 0≤y≤0,6,
- un composé **iii)** de formule LiₓM_{1-y-z-w}M'_{y}M"_{z}M‴_{w}O₂ (LMO2) où M, M', M" et M'" sont choisis dans le groupe consistant en B, Mg, Al, Si, Ca, Ti, V, Cr, Mn, Fe, Co, Ni, Cu, Zn, Y, Zr, Nb, W et Mo à la condition qu'au moins M ou M' ou M" ou M'" soit choisi parmi Mn, Co, Ni, ou Fe ; M, M', M" et M‴ étant différents les uns des autres; et 0,8≤x≤1,4 ; 0≤y≤0,5 ; 0≤z≤0,5; 0≤w≤0,2 et x+y+z+w<2, 1.

Enfin, l'invention a pour objet l'utilisation d'un élément électrochimique tel que décrit ci-avant, en charge ou en décharge à une température supérieure ou égale à 150°C.

### DESCRIPTION DES FIGURES

La figure 1 représente une vue d'un collecteur de courant présentant la forme d'une grille.
La figure 2 représente la variation de la capacité déchargée en fonction du nombre de cycles effectué pour les éléments électrochimiques A, B, C et D de l'exemple 1.
La figure 3 est un graphique représentant :
   - la variation de la capacité de l'élément E de l'exemple 2 rapportée à la masse de matière active de l'électrode positive de cet élément en fonction du nombre de cycles effectués.
   - la perte de capacité massique de l'élément E en fonction du nombre de cycles effectués.
La figure 4 représente la variation de la tension de l'élément E en fonction de la capacité déchargée d'une part lors de la décharge initiale et d'autre part au cours de la décharge du cycle de contrôle après 24 cycles.

### EXPOSE DE MODES DE REALISATION

Les différents constituants de l'élément électrochimique vont être décrits dans ce qui suit :

### Matière active négative :

La matière active négative présente un potentiel de fonctionnement supérieur ou égal à 1 V par rapport au potentiel du couple électrochimique Li⁺/Li.. La caractéristique selon laquelle la matière active négative présente un potentiel de fonctionnement supérieur ou égal à 1 V par rapport au potentiel du couple électrochimique Li⁺/Li est une caractéristique intrinsèque de la matière active. Elle peut être aisément mesurée par des essais de routine pour un homme du métier. Pour ce faire, l'homme du métier réalise un élément électrochimique comprenant une première électrode constituée de lithium métallique et une seconde électrode comprenant la matière active dont on veut déterminer le potentiel par rapport au couple électrochimique Li⁺/Li. Ces deux électrodes sont séparées par une membrane microporeuse en polyoléfine, typiquement en polyéthylène, imprégnée d'électrolyte, usuellement un mélange de carbonate d'éthylène et de carbonate de diméthyle, dans lequel est dissous du LiPF₆ à une concentration de 1 mol.L⁻¹. La mesure de potentiel est réalisée à 25°C. Des matières actives négatives présentant un potentiel de fonctionnement supérieur ou égal à 1 V par rapport au potentiel du couple électrochimique Li⁺/Li sont également décrites dans la littérature.

La matière active négative est de préférence choisie dans le groupe consistant en :
a) LiₐTi_{b}O₄ où 0,5≤a≤3 et 1≤b≤2,5 ;
b) LiₓMg_{y}Ti_{z}O₄ où x>0 ; z>0 ; 0,01≤y≤0,20 ; 0,01≤y/z≤0,10 et 0,5<(x+y)/z ≤1,0;
c) Li_{4+y}Ti_{5-d}M²_{d}O₁₂ où M² est au moins un élément choisi dans le groupe consistant en Mg, Al, Si, Ti, Zn, Zr, Ca, W, Nb, et Sn, avec -1≤y≤3,5 et 0≤d≤0,1 ;
d) H₂Ti₆O₁₃ ;
e) H₂Ti₁₂O₂₅ ;
f) TiO₂ ;
g) LiₓTiNb_{y}O_{z} où 0≤x≤5 ; 1≤y≤24 ; 7≤z≤ 62 ;
h) LiₐTiM_{b}Nb_{c}O_{7+σ} où 0≤a≤5 ; 0≤b≤0,3 ; 0≤c≤10 ; -0,3≤σ≤0,3 et M est au moins un élément choisi dans le groupe consistant en Fe, V, Mo et Ta ;
i) Nb_{α}Ti_{β}O_{7+γ} où 0≤α≤24 ; 0≤β≤ 1 ; -0,3≤γ≤ 0,3 ;
et les mélanges de ceux-ci.

De préférence, la matière active négative est un composé de type c) de formule Li₄Ti₅O₁₂ pouvant être ou non revêtu d'une couche de carbone.

La présence de lithium métal, de carbone ou de graphite dans l'électrode négative de l'élément est exclue de l'invention.

### Matière active positive :

La matière active positive est choisie dans le groupe consistant en :
- composé i) de formule LiₓMn_{1-y-z}M'_{y}M"_{z}PO₄ (LMP), où M'et M" sont différents l'un de l'autre et sont choisis dans le groupe consistant en B, Mg, Al, Si, Ca, Ti, V, Cr, Fe, Co, Ni, Cu, Zn, Y, Zr, Nb et Mo, avec 0,8≤x≤1,2 ; 0≤y≤0,6 ; 0≤z≤0,2 ;
- un composé ii) de formule LiₓFe_{1-y}M_{y}PO₄ (LFMP) où M est choisi dans le groupe consistant en B, Mg, Al, Si, Ca, Ti, V, Cr, Mn, Co, Ni, Cu, Zn, Y, Zr, Nb et Mo; et 0,8≤x≤1,2 ; 0≤y≤0,6 ;
- un composé iii) de formule LiₓM_{1-y-z-w}M'_{y}M"_{z}M‴_{w}O₂ (LMO2) où M, M', M" et M‴ sont choisis dans le groupe consistant en B, Mg, Al, Si, Ca, Ti, V, Cr, Mn, Fe, Co, Ni, Cu, Zn, Y, Zr, Nb, W et Mo à la condition qu'au moins M ou M' ou M" ou M‴ soit choisi parmi Mn, Co, Ni, ou Fe ; M, M', M" et M‴ étant différents les uns des autres; et 0,8≤x≤1,4 ; 0≤y≤0,5 ; 0≤z≤0,5 ; 0≤w≤0,2 et x+y+z+w<2,1;

Un premier composé i) préféré est un composé dans lequel : M' ou M" est choisi parmi Fe, Co et Ni ou un mélange de ces métaux.

Un second composé **i)** préféré est un composé dans lequel:
- M' ou M" est Fe ;
- x=1 ;
- y et/ou z sont inférieurs à 0,40.

Dans un mode de réalisation, y et/ou z sont inférieurs à 0,25.

Un troisième composé **i)** préféré est le composé de formule LiMnPO₄.

Un composé **ii)** préféré est le composé de formule LiFePO₄.

Un premier composé **iii)** préféré est un composé dans lequel :
M est Ni, M' est Mn et M" est Co et
M‴ est choisi parmi B, Mg, Al, Si, Ca, Ti, V, Cr, Mn, Fe, Co, Ni, Cu, Zn, Y, Zr, Nb et Mo, avec 0,8≤x≤1,4; 0<y≤0,5; 0<z≤0,5; 0≤w≤0,2 et x+y+z+w<2.
Selon un mode de réalisation, M est Ni, M' est Mn et M" est Co et x=1 ; 1-y-z-w≤0,60 ; 0,15≤y≤0,45 et 0,15≤z≤0,25. On peut citer LiNi_{0,5}Mn_{0,3}Co_{0,2}O₂; LiNi_{0,6}Mn_{0,2}Co_{0,2}O₂; LiNi_{0,4}Mn_{0,4}Co_{0,2}O₂.
Selon un mode de réalisation, M est Ni, M' est Mn et M" est Co et x=1 ; 0,6≤ 1-y-z-w≤0,85 ; 0,05≤y≤0,15 et 0,05≤z≤0,15. On peut citer LiNi_{0,80}Mn_{0,1}Co_{0,1}O₂.
Selon un mode de réalisation, M est Ni, M' est Mn et M" est Co et 0,8≤x≤1,4 ; 2-x-y-z-w≤0,40; 0,25≤y≤0,35 et 0,25≤z≤0,35. On peut citer Li₁₊ₓNi_{1/3}Mn_{1/3}Co_{1/3}O₂. Un exemple préféré est LiNi_{1/3}Mn_{1/3}Co_{1/3}O₂.

Un second composé **iii)** préféré est un composé dans lequel :
M est Ni, M' est Co et M" est Al et M" ' est B ou Mg et
0,9≤x≤1,1; 0,70≤2-x-y-z-w≤0,9 ; 0,05≤y≤0,25 ; 0<z≤0,10 et y+z+w=1. On peut citer LiNi_{0,8}Co_{0,15}Al_{0,05}O₂.

### Liant des électrodes positives et négatives :

Les matières actives positive et négative de l'élément électrochimique lithium-ion sont généralement mélangées à un ou plusieurs liant(s), dont la fonction est de lier les particules de matière active entre elles ainsi que de les lier au collecteur de courant sur lequel elles sont déposées.

Les liants pouvant typiquement être utilisés dans l'électrode positive et/ou l'électrode négative sont choisis dans le groupe consistant en le polytétrafluoroéthylène (PTFE), le polyamideimide (PAI), le polyimide (PI), le caoutchouc styrène-butadiène (SBR), l'alcool polyvinylique, et un mélange de ceux-ci. La Demanderesse a constaté que l'utilisation des ces liants était compatible avec une utilisation de l'élément lithium-ion à une température d'au moins 150°C et permettait d'augmenter le grammage de l'électrode positive et/ou négative.

Le liant préféré de l'électrode positive est le polytétrafluoroéthylène.

Le liant préféré de l'électrode négative est le polytétrafluoroéthylène, seul ou en association avec l'alcool polyvinylique.

Le caoutchouc styrène-butadiène (SBR) est le liant le moins préféré et l'électrode positive et/ou l'électrode négative peut ne pas en contenir.

L'utilisation de polyfluorure de vinylidène (PVDF) dans l'électrode positive et/ou l'électrode négative est exclue de l'invention.

### Collecteur de courant des électrodes positives et/ou négatives :

Un collecteur de courant présentant la forme d'une grille est de préférence utilisé pour l'électrode positive et/ou l'électrode négative. La structure grillagée permet une meilleure accroche mécanique de la matière active, par incrustation du mélange contenant la matière active dans les parties ajourées de la grille. Son utilisation en association avec les liants cités ci-avant contribue à augmenter davantage l'adhésion de la matière active au collecteur de courant. L'utilisation d'un tel collecteur de courant permet de porterie grammage de l'électrode à une valeur d'au moins 20 mg de mélange par cm² de surface de collecteur de courant et par face. Généralement, l'invention permet d'atteindre des valeurs de grammage se situant dans la plage allant de 20 à 25 mg de mélange par cm² de surface de collecteur de courant et par face. Le mélange est constitué de matière active, de liant(s) et éventuellement de composé ayant des propriétés de conducteur électrique élevée.

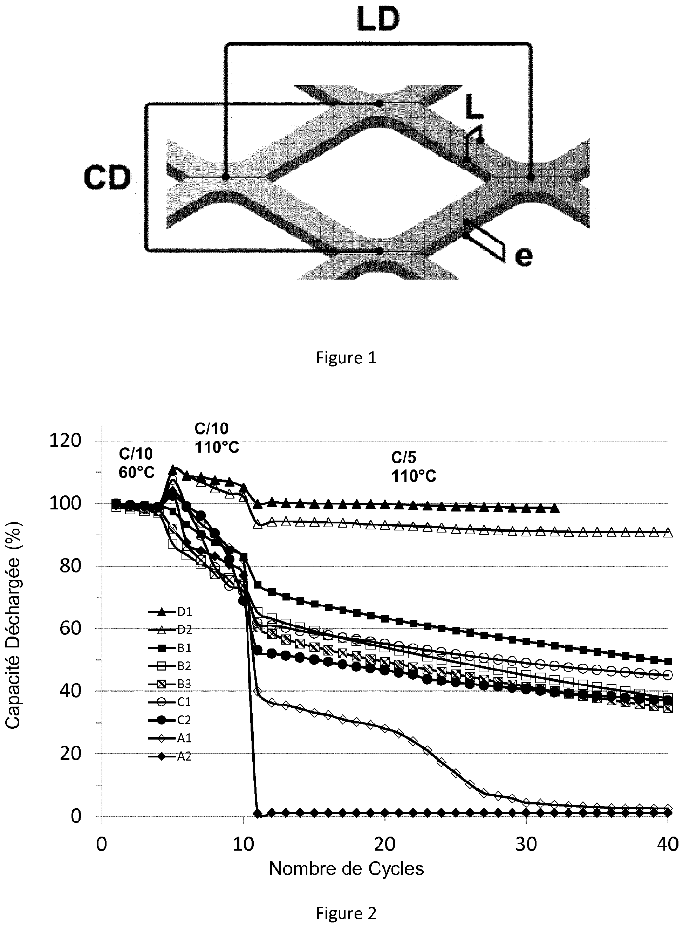

La grille utilisée est de préférence un métal déployé. Le métal déployé est réalisé par cisaillement d'un feuillard métallique dans une presse, équipée de couteaux. Les couteaux créent une série d'entailles espacées régulièrement dans le feuillard. En étirant le métal perpendiculairement à la direction des entailles, on crée un maillage métallique, généralement en forme de losanges laissant des vides entourés par des brins de métal interconnectés. La figure 1 représente une vue de dessus d'une maille de métal déployé. Le losange formé résulte de l'étirement du métal. Les brins de métal délimitent le losange. Les dimensions du losange ainsi que celles des brins de métal ne sont pas limitées en particulier. Néanmoins, des plages de dimensions typiques sont les suivantes :
- chaque brin de métal peut présenter une largeur L allant de 0,10 à 3 mm, de préférence allant de 0,18 à 2,5 mm ;
- la distance LD entre le milieu de deux interconnections de brins situées sur la diagonale la plus longue du losange varie de 0,4 mm à 50 mm, de préférence de 0,6 à 43 mm.
- la distance CD entre le milieu de deux interconnexions de brins situées sur la diagonale la plus courte du losange varie de 0,2 mm à 15 mm, de préférence de 0,5 à 13 mm.
- l'épaisseur « e » du métal déployé peut varier de 25 µm à 2 mm, de préférence de 120 µm à 1,5 mm, de préférence encore de 300 µm à 1 mm.

La nature du métal utilisé pour la grille n'est pas limitée. De préférence, il s'agit d'aluminium ou d'un alliage d'aluminium. Avantageusement, le collecteur de courant en forme de grille est utilisé pour le ou les électrodes positive(s) et le ou les électrodes négative(s). De plus, l'aluminium ou l'alliage d'aluminium peut être utilisé comme matériau de collecteur de courant pour l'électrode positive et l'électrode négative.

### Fabrication de l'électrode négative :

On mélange la matière active négative avec un ou plusieurs liants cités ci-avant, un solvant et généralement un ou plusieurs composés ayant des propriétés de conduction électrique élevée, tel que le carbone. On obtient une pâte que l'on dépose sur l'une ou les deux faces du collecteur de courant. Le collecteur de courant enduit de pâte est laminé afin d'ajuster son épaisseur. Une électrode négative est ainsi obtenue.

La composition de la pâte déposée sur l'électrode négative peut être la suivante :
- de 75 à 90 % de matière active négative, de préférence de 80 à 85 % ;
- de 5 à 15 % de liant(s), de préférence 10 % ;
- de 5 à 10 % de carbone, de préférence 7,5 %.

### Fabrication de l'électrode positive :

On pratique de la même manière que pour obtenir l'électrode négative mais en partant de matière active positive.

La composition de la pâte déposée sur l'électrode positive peut être la suivante :
- de 75 à 90% de matière active négative, de préférence de 80 à 90 %
- de 5 à 15% de liant(s), de préférence 10 % ;
- de 5 à 10% de carbone, de préférence 10 %

### Séparateur :

Le séparateur est l'un des constituants qui caractérise l'élément selon l'invention. Il présente un rétreint inférieur ou égal à 3% dans le sens de sa longueur et dans le sens de sa largeur, après une exposition à une température de 200°C d'une durée d'au moins une heure. L'homme du métier peut par une simple comparaison des dimensions du séparateur avant et après exposition à 200°C déterminer si le séparateur satisfait à ce critère. Il a été observé que la valeur limite de 3% de rétreint était une valeur critique pour permettre un fonctionnement de l'élément à une température d'au moins 150°C. Au-delà de cette valeur, les performances électriques se dégradent rapidement. De préférence, la valeur de rétreint mesurée dans les deux dimensions du séparateur est inférieure ou égale à 1%.

Un test pratique consiste à utiliser une bande de séparateur de 20 cm de longueur et de largeur inférieure ou égale à 5 cm. On fixe la bande de séparateur à une feuille d'aluminium via une des extrémités de la bande, dans le sens de la largeur. L'ensemble est placé dans une étuve à 200°C pendant une durée d'au moins une heure. La longueur et la largeur sont ensuite mesurées et comparées à leurs valeurs initiales. Toute variation supérieure ou égale à 3% dans au moins une des dimensions rend le séparateur impropre pour l'élément.

Des séparateurs répondant à ce critère peuvent être choisis parmi un séparateur à base de polyester, un séparateur à base de fibres de verre liées entre elles par un polymère, un séparateur à base de polyimide, un séparateur à base de polyamide, un séparateur à base de polyaramide, un séparateur à base de polyamideimide et un séparateur à base de cellulose. Le polyester peut être choisi parmi le téréphtalate de polyéthylène (PET) et le téréphtalate de polybutylène (PBT). Avantageusement, le polyester contient ou est revêtu d'un matériau choisi dans le groupe consistant en un oxyde métallique, un carbure, un nitrure, un borure, un siliciure et un sulfure. Ce matériau peut être SiO₂ ou Al₂O₃.

Les séparateurs à base de polyoléfine sont exclus de l'invention car ils présentent une résistance insuffisante à la chaleur.

De préférence, les séparateurs à base de fibres de verres non liées entre elles par un matériau liant, tel qu'un polymère, ne sont pas utilisés car ils ne présentent pas une flexibilité suffisante pour pouvoir être utilisés en éléments de format cylindrique.

De préférence, le séparateur est suffisamment flexible pour pouvoir être enroulé autour d'un cylindre d'un diamètre supérieur ou égal à 3 mm sans qu'une déchirure du séparateur ne soit observée. Selon un mode de réalisation, le séparateur peut être enroulé autour d'un cylindre d'un diamètre supérieur ou égal à 5 mm sans qu'une déchirure du séparateur ne soit observée. Un homme du métier peut par un simple essai, consistant à enrouler manuellement un séparateur autour d'un cylindre, déterminer si le séparateur satisfait à ce critère. De préférence, on accole au séparateur un collecteur de courant ou une électrode et on enroule l'ensemble autour du cylindre. Ce test permet de reproduire les conditions de spiralage du séparateur dans l'élément électrochimique. Il est de préférence conduit avec un collecteur de courant en forme de grille, tel que décrite ci-avant. Cette grille peut être en aluminium et posséder une épaisseur d'environ 300 µm.

On forme un faisceau électrochimique en intercalant un séparateur entre l'électrode positive et l'électrode positive. Dans le cas d'un élément de format cylindrique, on enroule le faisceau électrochimique pour former une spirale et on insère cette spirale dans un conteneur cylindrique.

### Electrolyte :

On remplit le conteneur muni du faisceau électrochimique, d'un électrolyte constitué d'au moins un solvant et de sel(s) de lithium.

Au moins 90% du volume du solvant de l'élément électrochimique est un liquide ionique, c'est-à-dire un sel possédant une température de fusion suffisamment basse pour que celui-ci soit à l'état liquide à la température d'utilisation de l'élément électrochimique. Le liquide ionique est constitué de la combinaison d'un anion et d'un cation.

On peut citer comme cation possible du liquide ionique les cations imidazolium, pyrazolium, 1,2,4-triazolium, 1,2,3,-triazolium, thiazolium, oxazolium, pyridazinium, pyrimidinium, pyrazinium, ammonium, phosphonium, pyridinium, piperidinium et pyrrolidinium. De préférence, le cation du liquide ionique est le pyrrolidinium, de préférence le 1-butyl 1-méthyl pyrrolidinium (BMP).

L'anion du liquide ionique est choisi parmi le tétrafluoroborate BF₄⁻, l'hexafluorophosphate PF₆⁻, l'hexafluoroarséniate AsF₆⁻, le bis(trifluoromethylsulfonyl)imide (TFSI) (CF₃SO₂)₂N⁻, le bis(pentafluoroethylsulfonyl)imide (CF₃CF₂SO₂)₂N⁻, le tris(pentafluoroethyl)trifluorophosphate (C₂F₅)₃PF₃⁻ (FAP), le trifluoromethanesulfonate (triflate) CF₃SO₃⁻. L'anion est choisi de préférence parmi le tris(pentafluoroethyl)trifluorophosphate[(C₂F₅)₃PF₃]⁻ (FAP), le bis(trifluorométhylsulfonyl)imide [(CF₃SO₂)₂N] (TFSI).

L'anion et le cation doivent être choisis de sorte que le liquide ionique soit à l'état liquide dans la plage de température de fonctionnement de l'accumulateur. Le liquide ionique présente l'avantage d'être stable thermiquement, d'être ininflammable, non volatile et d'être peu toxique. Il est choisi de préférence dans le groupe consistant en :
- le 1-butyl 1-méthyl pyrrolidinium bis(trifluorométhylsulfonyl)imide (BMP-TFSI),
- le 1-butyl 1-méthyl pyrrolidinium tris(pentafluoroéthyl)trifluorophosphate (BMP-FAP),
- l'éthyl-(2-méthoxyéthyl) diméthyl ammonium bis(trifluorométhylsulfonyl)imide,
- le 1-méthyl 1-propyl piperidinium bis(trifluorométhylsulfonyl)imide.

Selon un mode de réalisation, le liquide ionique représente au moins 95% en volume du solvant, de préférence au moins 99%.

Le solvant de l'élément électrochimique peut être constitué d'un seul liquide ionique ou d'un mélange de différents liquides ioniques.

Selon un mode de réalisation, le solvant ne comprend aucun composé chimique jouant le rôle de solvant, autre que le (ou les) liquide(s) ionique(s). De préférence, le solvant ne comprend ni carbonate cyclique ou linéaire, ni ester cyclique ou linéaire. De préférence, le solvant ne comprend ni éthers (glymes), ni dioxolane.

Au moins un sel de lithium est dissous dans le liquide ionique. La nature de ce sel n'est pas limitée. Une liste non exhaustive d'exemples de sels de lithium est donnée dans ce qui suit. Le sel de lithium peut être choisi parmi l'hexafluorophosphate de lithium LiPF₆, le tétrafluoroborate de lithium LiBF₄, le trifluorométhanesulfonate de lithium LiCF₃SO₃, le bis(fluorosulfonyl)imide de lithium Li(FSO₂)₂N (LiFSI), le trifluorométhanesulfonimide de lithium LiN(CF₃SO₂)₂ (LiTFSI), le trifluorométhanesulfoneméthide de lithium LiC(CF₃SO₂)₃ (LiTFSM), le bisperfluoroéthylsulfonimide de lithium LiN(C₂F₅SO₂)₂ (LiBETI), le 4,5-dicyano-2-(trifluoromethyl) imidazolide de lithium (LiTDI), le bis(oxalatoborate) de lithium (LiBOB), le tris(pentafluoroethyl)trifluorophosphate de lithium LiPF₃(CF₂CF₃)₃ (LiFAP) et les mélanges de ceux-ci.

Généralement, la concentration du sel de lithium est voisine d'une mole par litre, généralement comprise entre 0,7 et 1,5 mol.L⁻¹.

On préfère utiliser un électrolyte dont le solvant est BMP-TFSI et le sel de lithium est LiTFSI.

L'invention ne concerne pas les éléments électrochimiques de type lithium-ion contenant un électrolyte solide. En effet, en raison de la forme solide de l'électrolyte, de tels éléments ne peuvent pas être fabriqués en format cylindrique, c'est-à-dire avec un faisceau de plaques spiralées.

Un élément selon l'invention comprend typiquement l'association des constituants suivants :
a) au moins une électrode positive comprenant :
   i) un oxyde lithié de formule LiMO₂ où M est choisi dans le groupe consistant en Ni, Mn, Co, Al et un mélange de ceux-ci, et/ou
   ii) un phosphate lithié de formule LiMPO₄ où M est choisi dans le groupe consistant en Fe, Mn et un mélange de ceux-ci,
   iii) PTFE et/ou un polyimide comme liant,
   iv) un collecteur de courant sous la forme d'une grille en aluminium
b) au moins une électrode négative comprenant :
   i) Li₄Ti₅O₁₂
   ii) PTFE comme liant avec ou sans alcool polyvinylique, avec ou sans un polyimide
   iii) un collecteur de courant sous la forme d'une grille en aluminium
c) un électrolyte comprenant BMP-TFSI et LiTFSI comme sel de lithium,
d) un séparateur en fibres de verre liées entre elles par un polymère ou un séparateur en PET renforcé de céramique, par exemple Al₂O₃.

### Format de l'élément électrochimique :

Le format de l'élément électrochimique n'est pas particulièrement limité. Ce peut être un élément de format prismatique, de format cylindrique ou un élément de type pochette. De préférence, le format est cylindrique car il permet d'obtenir une puissance élevée.

Selon un mode de réalisation, le format de l'élément électrochimique n'est pas le format bouton.

Selon un mode de réalisation, l'élément électrochimique selon l'invention présente une capacité électrochimique supérieure à 1 mAh, de préférence supérieure ou égale à 5 mAh. Elle peut encore être supérieure ou égale à 100 mAh, voire supérieure ou égale à 1 Ah. Elle peut être comprise entre 1 et 10 Ah.

Selon un mode de réalisation, l'élément électrochimique présente un format cylindrique standard « 18650 », c'est-à-dire un diamètre de 18,6 mm et une hauteur de 65,2 mm.

Selon un mode de réalisation, l'élément électrochimique présente un format cylindrique standard « D », c'est-à-dire un diamètre de 32 mm et une hauteur de 61,9 mm. Sa capacité peut atteindre 3,5 Ah.

L'élément électrochimique selon l'invention est capable de fonctionner en charge et en décharge à une température allant de 150°C à 200°C, de préférence de 180 à 200°C.

Selon un mode de réalisation préféré, l'élément électrochimique est capable de fonctionner en charge et en décharge à une température allant de 165°C à 200°C.

Selon un mode de réalisation préféré, l'élément électrochimique est capable de de fonctionner en charge et en décharge à une température allant de 60°C à 180°C.

Bien qu'apte à fonctionner à haute température, l'élément électrochimique peut aussi être utilisé à la température ambiante (entre 15 et 25°C). Il est également capable de fonctionner en charge et en décharge à une température allant de 25°C à 150°C. L'élément électrochimique peut être utilisé dans le domaine de l'aéronautique, de l'automobile, dans les télécommunications, dans les dispositifs d'alimentation de secours, dans le domaine ferroviaire ainsi que dans le domaine du forage pétrolier.

### EXEMPLES

### Exemple 1 :

Des éléments électrochimiques lithium-ion de format bouton de quatre types A, B, C et D ont été fabriqués. Le Tableau 1 ci-dessous indique la nature de leurs constituants. Les éléments diffèrent par la nature de l'électrolyte utilisé. Deux éléments A1 et A2 de type A ont été fabriqués. Trois éléments B1, B2 et B3 de type B ont été fabriqués. Deux éléments C1 et C2 de type C ont été fabriqués. Deux éléments D1 et D2 de type D ont été fabriqués.

**Tableau 1 :**

| Elément | Composition de l'électrode positive | Composition de l'électrode négative | Composition de l'électrolyte | Nature du séparateur |
|---|---|---|---|---|
| A (hors invention) | LiFePO₄ : 89 % | Li₄Ti₅O₁₂ : 90% | Solvants : 50% PC / 50% EC* + 2% VC | Fibres de verre |
| | | | Sel : LiPF₆ 1 mol.L⁻¹ | |
| B (hors invention) | | | Solvants : 50% PC / 50% EC* | |
| | Liant polyimide : 5% | Liant polyimide : 5% | Sel :LiPF₆ 1 mol.L⁻¹ | |
| C (hors invention) | Carbone : 6% | Carbone : 5% | Solvant : PC : 100% | |
| | | | Sel : LiBETI 1 mol.L⁻¹ | |
| D (selon l'invention) | | | Solvant : BMP-TFSI | |
| | | | Sel : LiTFSI 0,7 mol.L⁻¹ | |

| | | | | |
|---|---|---|---|---|
| PC : carbonate de propylène EC : carbonate d'éthylène VC : carbonate de vinylène BMP-TFSI : 1-butyl 1-méthyl pyrrolidinium bis(trifluorométhylsulfonyl)imide LiBETI : bisperfluoroéthylsulfonimide de lithium LiTFSI : trifluorométhanesulfonimide de lithium * pourcentages massiques exprimés par rapport à la somme des masses des solvants EC et PC | | | | |

Les éléments de type A, B, C et D ont été soumis au test électrique suivant :
- 4 cycles au régime de décharge de C/10 à la température de 60°C
- 6 cycles au régime de décharge de C/10 à la température de 110°C
- à partir du 11^{ème} cycle, cyclage au régime de décharge de C/5 à la température de 110°C (C désigne la capacité nominale de l'élément électrochimique)

Le cyclage a été effectué entre les tensions minimale et maximale de 1,1V et 2,3 V.

La capacité déchargée par les éléments a été relevée à la fin de chaque décharge. La variation de la capacité déchargée a été représentée en fonction du nombre de cycles effectué. Cette variation est représentée à la figure 2. Cette figure montre que lorsque le solvant de l'électrolyte contient un carbonate (PEC ou EC), la perte de capacité est supérieure à 20% au 11^{ème} cycle. Ceci est le cas pour les éléments de type A, B et C. Lorsque le solvant de l'électrolyte est un liquide ionique, la perte de capacité au 11^{ème} cycle est d'environ 4%, ce qui est le cas des éléments de type D. Après 40 cycles, la perte de capacité reste inférieure à 10 % pour ces éléments. La figure 2 met donc en évidence l'intérêt de l'utilisation du liquide ionique (BMP-TFSI) pour une application à haute température.

### Exemple 2 :

Un élément électrochimique E lithium-ion de format bouton a été fabriqué. Le Tableau 2 ci-dessous indique la nature de ses constituants. L'élément E diffère des éléments de type A à D entre autres par la nature de la matière active positive qui est un oxyde lithié de nickel, manganèse et de cobalt au lieu de LiFePO₄.

**Tableau 2 :**

| Elément | Composition de l'électrode positive | Composition de l'électrode négative | Composition de l'électrolyte | Nature du séparateur |
|---|---|---|---|---|
| E (selon l'invention) | LiN_{1/3}Mn_{1/3}Co_{1/3} : 80 % | Li₄Ti₅O₁₂ : 80% | Solvant : BMP-TFSI | Polyester (PET) renforcé de céramique (Al₂O₃) |
| | Liant PTFE : 10% | Liant PTFE : 10% | Sel : LiTFSI 0,7 mol.L⁻¹ | |
| | Carbone : 10% | Carbone : 10% | | |

| | | | | |
|---|---|---|---|---|
| PET : téréphtalate de polyéthylène PTFE : polytétrafluoroéthylène BMP-TFSI : 1-butyl 1-méthyl pyrrolidinium bis(trifluorométhylsulfonyl)imide LiTFSI : trifluorométhanesulfonimide de lithium | | | | |

### Test électrique 1 :

L'élément E a été soumis au test électrique suivant :
- 1 cycle au régime de décharge de C/10 à la température de 150°C
- 20 cycles au régime de décharge de C/5 à la température de 150°C.

Le cyclage a été effectué entre les tensions minimale et maximale de 1,5V et 2,4 V.

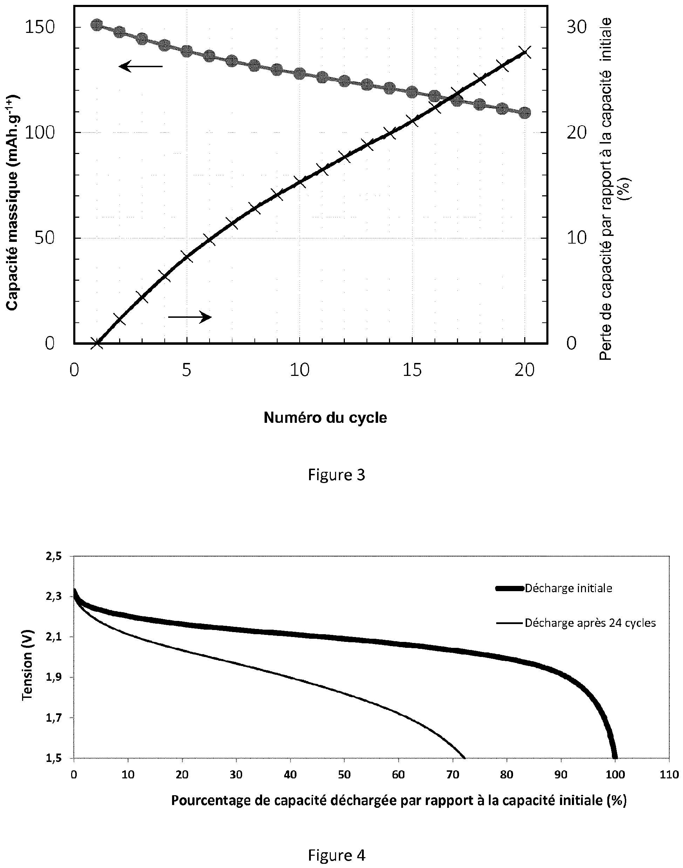

La capacité déchargée par l'élément a été relevée à la fin de chaque décharge. La capacité déchargée a été représentée en fonction du nombre de cycles effectué. Cette variation est représentée à la figure 3. Cette figure montre que la perte de capacité au 20^{ème} cycle est de 28%, ce qui est satisfaisant.

### Test électrique 2 :

L'élément E a été ensuite placé à une température de 150°C et a été soumis au test électrique suivant :
- une décharge au régime de C/6 pour l'amener à un état de charge de 25% ;
- 22 cycles de charge / décharge entre les états de charge de 25 et 75% au régime de décharge de C/6,
- au 24^{ème} cycle, un cycle de contrôle comprenant une décharge de l'élément au régime de C/6 jusqu'à la tension d'arrêt de 1,5V a été effectué. La capacité restituée par l'élément au cours de cette décharge a été mesurée. La figure 4 est une comparaison entre la courbe de décharge de l'élément E au cours de la décharge initiale et la courbe de décharge de cet élément au cours du cycle de contrôle après 24 cycles. La perte de capacité par rapport à la capacité initiale de l'élément est de seulement 27%, ce qui est satisfaisant.

Les tests électriques menés sur l'élément E démontrent bien la possibilité d'utiliser l'élément à une température d'au moins 150°C sans observer de perte importante de capacité.

## Revendications

1. Elément électrochimique lithium-ion comprenant :
- au moins une électrode négative comprenant une matière active présentant un potentiel de fonctionnement supérieur ou égal à 1V par rapport au potentiel du couple électrochimique Li⁺/Li ;
- au moins une électrode positive ;
l'électrode négative et/ou l'électrode positive comprenant un liant choisi parmi le polytétrafluoroéthylène, le polyamideimide, le polyimide, le caoutchouc styrène-butadiène et l'alcool polyvinylique ou un mélange de ceux-ci;
- un électrolyte liquide comprenant un solvant dont au moins 90 % du volume est un liquide ionique dont l'anion est choisi parmi le tétrafluoroborate BF₄⁻, l'hexafluorophosphate PF₆⁻, l'hexafluoroarséniate AsF₆⁻, le bis(trifluoromethylsulfonyl)imide (TFSI) (CF₃SO₂)₂N⁻, le bis(pentafluoroethylsulfonyl)imide (CF₃CF₂SO₂)₂N⁻, le tris(pentafluoroethyl)trifluorophosphate (C₂F₅)₃PF₃⁻ (FAP) et le trifluoromethanesulfonate (triflate) CF₃SO₃⁻;
- un séparateur présentant un rétreint inférieur ou égal à 3% dans le sens de sa longueur et dans le sens de sa largeur, après exposition à une température de 200°C d'une durée d'au moins une heure.

2. Elément électrochimique selon la revendication 1, dans lequel le séparateur présente en outre la propriété de pouvoir être enroulé autour d'un cylindre d'un diamètre supérieur ou égal à 3 mm sans qu'une déchirure du séparateur ne soit observée.

3. Elément électrochimique selon la revendication 1 ou 2, dans lequel la matière active présentant un potentiel de fonctionnement supérieur ou égal à 1V par rapport au potentiel du couple électrochimique Li⁺/Li est choisie dans le groupe consistant en :
a) LiₐTi_{b}O₄ où 0,5≤a≤3 et 1<b<2,5 ;
b) LiₓMg_{y}Ti_{z}O₄ où x>0 ; 0,01≤y≤0.20 ; z>0 ; 0,01≤y/z≤0,10 et 0,5≤(x+y)/z ≤1,0;
c) Li_{4+y}Ti_{5-d}M²_{d}O₁₂ où M² est au moins un élément choisi dans le groupe consistant en Mg, Al, Si, Ti, Zn, Zr, Ca, W, Nb, et Sn, avec -1≤y≤3,5 et 0≤d≤0,1 ;
d) H₂Ti₆O₁₃ ;
e) H₂Ti₁₂O₂₅ ;
f) TiO₂ ;
g) LiₓTiNb_{y}O_{z} où 0≤x≤5 ; 1≤y≤24 ; 7≤z≤ 62 ;
h) LiₐTiM_{b}Nb_{c}O_{7+σ} où 0≤a≤5 ; 0≤b≤0,3 ; 0≤c≤10 ; -0,3≤σ≤0,3 et M est au moins un élément choisi dans le groupe consistant en Fe, V, Mo et Ta ;
i) Nb_{α}Ti_{β}O_{7+γ} où 0≤α≤24 ; 0≤β≤ 1 ; -0,3≤γ≤ 0,3 ;
et les mélanges de ceux-ci.

4. Elément électrochimique selon la revendication 3, dans lequel la matière active présentant un potentiel de fonctionnement supérieur ou égal à 1V par rapport au potentiel du couple électrochimique Li⁺/Li est Li₄Ti₅O₁₂.

5. Elément électrochimique selon l'une des revendications 1 à 4, dans lequel la matière active présentant un potentiel de fonctionnement supérieur ou égal à 1V par rapport au potentiel du couple électrochimique Li⁺/Li, possède un revêtement à base de carbone.

6. Elément électrochimique selon l'une des revendications précédentes, dans lequel le séparateur est choisi dans le groupe consistant en :
- un séparateur à base de polyester,
- un séparateur à base de fibres de verre liées entre elles par un polymère,
- un séparateur à base de polyimide,
- un séparateur à base de polyamide,
- un séparateur à base de polyamideimide,
- un séparateur à base de polyaramide, et
- un séparateur à base de cellulose.

7. Elément électrochimique selon la revendication 6, dans lequel le séparateur contient ou est revêtu d'un matériau choisi dans le groupe consistant en un oxyde métallique, un carbure, un nitrure, un borure, un siliciure et un sulfure.

8. Elément électrochimique selon l'une des revendications précédentes, dans lequel le liquide ionique est choisi dans le groupe consistant en :
- le 1-butyl 1-méthyl pyrrolidinium bis(trifluorométhylsulfonyl)imide (BMP-TFSI),
- le 1-butyl 1-méthyl pyrrolidinium tris(pentafluoroéthyl)trifluorophosphate (BMP-FAP),
- l'éthyl-(2-méthoxyéthyl) diméthyl ammonium bis(trifluorométhylsulfonyl)imide,
- le 1-méthyl 1-propyl piperidinium bis(trifluorométhylsulfonyl)imide.

9. Elément électrochimique selon l'une des revendications précédentes, comprenant un sel de lithium dissous dans le liquide ionique, lequel sel est choisi dans le groupe consistant en :
- l'hexafluorophosphate de lithium LiPF₆,
- le tris(pentafluoroethyl)trifluorophosphate de lithium LiFAP,
- le bisoxalatoborate de lithium LiBOB,
- l'hexafluoroarsénate de lithium LiAsF₆,
- le tétrafluoroborate de lithium LiBF₄,
- le trifluorométhanesulfonate de lithium LiCF₃SO₃,
- le trifluorométhane sulfonimide de lithium LiN(CF₃SO₂)₂ (LiTFSI) et le trifluorométhanesulfoneméthide de lithium LiC(CF₃SO₂)₃ (LiTFSM), de préférence LiTFSI.

10. Elément électrochimique selon l'une des revendications précédentes, dans lequel l'électrode négative et/ou l'électrode positive comprend un collecteur de courant qui est une grille métallique.

11. Elément électrochimique selon la revendication 10, dans lequel le métal de la grille est de l'aluminium ou un alliage à base d'aluminium.

12. Elément électrochimique selon la revendication 10 ou 11, dans lequel la grille présente une épaisseur inférieure ou égale à 500 µm, de préférence inférieure ou égale à 300 µm.

13. Elément électrochimique selon l'une des revendications 1 à 12, comprenant au moins une électrode positive comprenant une matière active choisie dans le groupe consistant en :
- composé i) de formule LiₓMn_{1-y-z}M'_{y}M"_{z}PO₄ (LMP), où M'et M" sont différents l'un de l'autre et sont choisis dans le groupe consistant en B, Mg, Al, Si, Ca, Ti, V, Cr, Fe, Co, Ni, Cu, Zn, Y, Zr, Nb et Mo, avec 0,8≤x≤1,2 ; 0≤y≤0,6 ; 0≤z≤0,2 ;
- un composé **ii)** de formule LiₓFe_{1-y}M_{y}PO₄ (LFMP) où M est choisi dans le groupe consistant en B, Mg, Al, Si, Ca, Ti, V, Cr, Mn, Co, Ni, Cu, Zn, Y, Zr, Nb et Mo; et 0,8≤x≤1,2 ; 0≤y≤0,6,
- un composé **iii)** de formule LiₓM_{1-y-z-w}M'_{y}M"_{z}M‴_{w}O₂ (LMO2) où M, M', M" et M'" sont choisis dans le groupe consistant en B, Mg, Al, Si, Ca, Ti, V, Cr, Mn, Fe, Co, Ni, Cu, Zn, Y, Zr, Nb, W et Mo à la condition qu'au moins M ou M' ou M" ou M'" soit choisi parmi Mn, Co, Ni, ou Fe ; M, M', M" et M‴ étant différents les uns des autres; et 0,8≤x≤1,4 ; 0≤y≤0,5 ; 0≤z≤0,5; 0≤w≤0,2 et x+y+z+w<2,1.

14. Utilisation d'un élément électrochimique selon l'une des revendications 1 à 13, en charge ou en décharge à une température supérieure ou égale à 150°C.

## Patentansprüche

1. Elektrochemisches Lithium-Ionen-Element, umfassend:
- mindestens eine negative Elektrode, die ein aktives Material umfasst, welches ein Betriebspotenzial von mindestens 1V aufweist, unter Bezugnahme auf das Potenzial des elektrochemischen Paares Li⁺/Li;
- mindestens eine positive Elektrode;
wobei die negative Elektrode und/oder die positive Elektrode ein Bindemittel umfasst, das aus Polytetrafluorethylen, Polyamidimid, Polyimid, StyrolButadien-Kautschuk, Polyvinylalkohol oder einer Mischung davon ausgewählt ist;
- einen flüssigen Elektrolyten, der ein Lösungsmittel umfasst, wobei eine ionische Flüssigkeit, deren Anion aus Tetrafluorborat BF₄⁻, Hexafluorphosphat PF₆⁻, Hexafluorarsenat AsF₆⁻, bis-(Trifluormethylsulfonyl)imid (TFSI) (CF₃SO₂)₂N⁻, bis-(Pentafluorethylsulfonyl)imid (CF₃CF₂SO₂)₂N-, tris-(Pentafluorethyl)trifluorphosphat (C₂F₅)₃PF₃⁻ (FAP) und Trifluormethansulfonat (Triflat) CF₃SO₃⁻ ausgewählt ist, mindestens 90 % des Volumens davon ausmacht;
- einen Separator, der einen Schrumpf von höchstens 3 % in seiner Längenrichtung und in seiner Breitenrichtung zeigt, nachdem er über eine Dauer von mindestens einer Stunde einer Temperatur von 200 °C ausgesetzt wurde.

2. Elektrochemisches Element nach Anspruch 1, wobei der Separator darüber hinaus die Eigenschaft aufweist, um einen Zylinder mit einem Durchmesser von mindestens 3 mm aufgewickelt werden zu können, ohne dass ein Zerreißen des Separators festzustellen ist.

3. Elektrochemisches Element nach Anspruch 1 oder 2, wobei das aktive Material, welches unter Bezugnahme auf das elektrochemische Paar Li⁺/Li ein Betriebspotenzial von mindestens 1V aufweist, aus der Gruppe ausgewählt ist, welches aus Folgendem besteht:
a) LiₐTibO₄, wobei 0,5≤a≤3 und 1≤b≤2,5;
b) LiₓMg_{y}Ti_{z}O₄, wobei x>0; 0,01≤y≤0,20; z>0; 0,01≤y/z≤0,10 und 0,5≤(x+y)/z ≤1,0;
c) Li_{4+y}Ti_{5-d}M²_{d}O₁₂, wobei es sich bei M² um mindestens ein Element handelt, das aus der Gruppe ausgewählt ist, welche aus Mg, Al, Si, Ti, Zn, Zr, Ca, W, Nb und Sn besteht, mit -1≤y≤3,5 und 0≤d≤0,1;
d) H₂Ti₆O₁₃;
e) H₂Ti₁₂O₂₅;
f) TiO₂;
g) LiₓTiNb_{y}O_{z}, wobei 0≤x≤5; 1≤y≤24; 7≤z≤62;
h) LiₐTiM_{b}Nb_{c}O_{7+σ}, wobei 0≤a≤5; 0≤b≤0,3; 0≤c≤10; - 0,3≤σ≤0,3, und es sich bei M um mindestens ein Element handelt, das aus der Gruppe ausgewählt ist, welche aus Fe, V, Mo und Ta besteht;
i) NbₐTi_{β}O_{7-γ}, wobei 0≤α≤24; o≤β≤ 1; -0,3≤γ≤ 0,3;
und den Mischungen davon.

4. Elektrochemisches Element nach Anspruch 3, wobei es sich bei dem aktiven Material, welches unter Bezugnahme auf das elektrochemische Paar Li⁺/Li ein Betriebspotenzial von mindestens 1V aufweist, um Li₄Ti₅O₁₂ handelt.

5. Elektrochemisches Element nach einem der Ansprüche 1 bis 4, wobei das aktive Material, welches unter Bezugnahme auf das elektrochemische Paar Li⁺/Li ein Betriebspotenzial von mindestens 1V aufweist, eine Beschichtung auf Basis von Kohlenstoff besitzt.

6. Elektrochemisches Element nach einem der vorhergehenden Ansprüche, wobei der Separator aus der Gruppe ausgewählt ist, welche aus Folgendem besteht:
- einem Separator auf Basis von Polyester,
- einem Separator auf Basis von Glasfasern, die durch ein Polymer miteinander verbunden sind,
- einem Separator auf Basis von Polyimid,
- einem Separator auf Basis von Polyamid,
- einem Separator auf Basis von Polyamidimid,
- einem Separator auf Basis von Polyaramid, und
- einem Separator auf Basis von Cellulose.

7. Elektrochemisches Element nach Anspruch 6, wobei der Separator ein Material enthält oder damit beschichtet ist, welches aus der Gruppe ausgewählt ist, die aus einem Metalloxid, einem Carbid, einem Nitrid, einem Borid, einem Silicid und einem Sulfid besteht.

8. Elektrochemisches Element nach einem der vorhergehenden Ansprüche, wobei die ionische Flüssigkeit aus der Gruppe ausgewählt ist, welche aus Folgendem besteht:
- 1-Butyl-1-methylpyrrolidinium-bis(trifluormethylsulfonyl)imid (BMP-TFSI),
- 1-Butyl-1-methylpyrrolidinium-tris(pentafluorethyl)trifluorphosphat (BMP-FAP),
- Ethyl-(2-methoxyethyl)dimethylammonium-bis(trifluormethylsulfonyl)imid,
- 1-Methyl-1-propylpiperidinium-bis(trifluormethylsulfonyl)imid.

9. Elektrochemisches Element nach einem der vorhergehenden Ansprüche, wobei es ein Lithiumsalz umfasst, das in der ionischen Flüssigkeit gelöst ist, wobei dieses Salz aus der Gruppe ausgewählt ist, welche aus Folgendem besteht:
- Lithiumhexafluorphosphat LiPF₆,
- Lithium-tris(pentafluorethyl)trifluorphosphat LiFAP,
- Lithium-bis(oxalato)borat LiBOB,
- Lithiumhexafluorarsenat LiAsF₆,
- Lithiumtetrafluorborat LiBF₄,
- Lithiumtrifluormethansulfonat LiCF₃SO₃,
- Lithiumtrifluormethansulfonimid LiN(CF₃SO₂)₂ (LiTFSI) und Lithiumtrifluormethansulfonmethid LiC(CF₃SO₂)₃ (LiTFSM), vorzugsweise LiTFSI.

10. Elektrochemisches Element nach einem der vorhergehenden Ansprüche, wobei die negative Elektrode und/oder die positive Elektrode einen Stromsammler umfasst, bei welchem es sich um ein Metallgitter handelt.

11. Elektrochemisches Element nach Anspruch 10, wobei es sich bei dem Metall des Gitters um Aluminium oder um eine Legierung auf Aluminiumbasis handelt.

12. Elektrochemisches Element nach Anspruch 10 oder 11, wobei das Gitter eine Dicke von höchstens 500 µm, vorzugsweise von höchstens 300 µm aufweist.

13. Elektrochemisches Element nach einem der Ansprüche 1 bis 12, wobei es mindestens eine positive Elektrode umfasst, die ein aktives Material umfasst, welches aus der Gruppe ausgewählt ist, die aus Folgendem besteht:
- Verbindung i) der Formel LiₓMn_{1-y-z}M'_{y}M"_{z}PO₄ (LMP), wobei M' und M" sich voneinander unterscheiden und aus der Gruppe ausgewählt sind, welche aus B, Mg, Al, Si, Ca, Ti, V, Cr, Fe, Co, Ni, Cu, Zn, Y, Zr, Nb und Mo besteht, mit 0,8≤x≤1,2; 0≤y≤0,6; 0≤z≤0,2;
- einer Verbindung ii) der Formel LiₓFe_{1-y}M_{y}PO₄ (LFMP), wobei M aus der Gruppe ausgewählt ist, welche aus B, Mg, Al, Si, Ca, Ti, V, Cr, Mn, Co, Ni, Cu, Zn, Y, Zr, Nb und Mo besteht; und 0,8≤x≤1,2; 0≤y≤0,6,
- einer Verbindung iii) der Formel LiₓM_{1-y-z-w}M'_{y}M"_{z}M‴_{w}O₂ (LMO2), wobei M, M', M" und M" ' aus der Gruppe ausgewählt sind, die aus B, Mg, Al, Si, Ca, Ti, V, Cr, Mn, Fe, Co, Ni, Cu, Zn, Y, Zr, Nb, W und Mo besteht, mit der Maßgabe, dass zumindest M oder M' oder M" oder M‴ aus Mn, Co, Ni oder Fe ausgewählt ist; wobei M, M', M" und M"' sich voneinander unterscheiden; und 0,8≤x≤1,4; 0≤y≤0,5; 0≤z≤0,5; 0≤w≤0,2 und x+y+z+w≤2,1.

14. Verwendung eines elektrochemischen Elements nach einem der Ansprüche 1 bis 13, zum Laden oder Entladen bei einer Temperatur von mindestens 150 °C.

## Claims

1. A lithium-ion electrochemical cell comprising:
- at least one negative electrode comprising an active material having an operating potential greater than or equal to 1 V with respect to the potential of the electrochemical couple Li+/Li;
- at least one positive electrode;
the negative electrode and/or the positive electrode comprising a binder selected from polytetrafluoroethylene, polyamideimide, polyimide, styrene-butadiene rubber and polyvinyl alcohol or a mixture thereof;
- a liquid electrolyte comprising a solvent, at least 90% by volume of which is an ionic liquid the anion of which is selected from the group consisting of tetrafluoroborate BF4-, hexafluorophosphate PF6-, hexafluoroarsenate AsF6-, bis(trifluoromethylsulfonyl)imide (TFSI) (CF3SO2)2N-, bis(pentafluoroethylsulfonyl)imide (CF3CF2SO2)2N-, tris(pentafluoroethyl)trifluorophosphate (C2F5)3PF3- (FAP) and trifluoromethanesulfonate (triflate) CF3SO3-;
- a separator having a shrinkage of less than or equal to 3% in the direction of its length and in the direction of its width, after exposure to a temperature of 200°C for a period of at least one hour.

2. The electrochemical cell as claimed in claim 1, wherein the separator further has the property that it can be wrapped around a cylinder with a diameter greater than or equal to 3 mm without tearing of the separator being observed.

3. The electrochemical cell as claimed in claim 1 or 2, wherein the active material having an operating potential greater than or equal to 1 V with respect to the electrochemical couple potential Li⁺/Li is selected from the group consisting of:
a) LiₐTi_{b}O₄ where 0.5≤a≤3 and 1<b<2.5;
b) LiₓMg_{y}Ti_{z}O₄ where x>0; 0.01≤y≤0.20; z>0; 0.01≤y/z≤0.10 and 0.5≤(x+y)/z ≤1.0;
c) Li_{4+y}Ti_{5-d}M²_{d}O₁₂ where M² is at least one element selected from the group consisting of Mg, Al, Si, Ti, Zn, Zr, Ca, W, Nb, and Sn, with -1≤y≤3.5 and 0≤d≤0.1;
d) H₂Ti₆O₁₃;
e) H₂Ti₁₂O₂₅;
f) TiO₂;
g) LiₓTiNb_{y}O_{z} where 0≤x≤5; 1≤y≤24; 7≤z≤ 62;
h) LiₐTiM_{b}Nb_{c}O_{7+σ} where 0≤a≤5; 0≤b≤0.3; 0≤c≤10; -0.3≤σ≤0.3 and M is at least one element selected from the group consisting of Fe, V, Mo and Ta;
i) Nb_{α}Ti_{β}O_{7+γ} where 0≤α≤24; 0≤β≤ 1; -0.3≤γ≤ 0.3;
and mixtures thereof.

4. The electrochemical cell as claimed in claim 3, wherein the active material having an operating potential greater than or equal to 1 V with respect to the electrochemical couple potential Li⁺/Li is Li₄Ti₅O₁₂.

5. The electrochemical cell as claimed in one of claims 1 to 4, wherein the active material having an operating potential greater than or equal to 1 V with respect to the electrochemical couple potential Li⁺/Li, has a carbon-based coating.

6. The electrochemical cell as claimed in one of the preceding claims, wherein the separator is selected from the group consisting of:
- a polyester-based separator,
- a separator based on glass fibers bonded together by a polymer,
- a polyimide-based separator,
- a polyamide-based separator,
- a polyamideimide-based separator,
- a polyaramide-based separator, and
- a cellulose-based separator.

7. The electrochemical cell as claimed in claim 6, wherein the separator contains or is coated with a material selected from the group consisting of a metal oxide, a carbide, a nitride, a boride, a silicide and a sulfide.

8. The electrochemical cell as claimed in one of the preceding claims, wherein the ionic liquid is selected from the group consisting of:
- 1-butyl 1-methyl pyrrolidinium bis(trifluoromethylsulfonyl)imide (BMP-TFSI),
- 1-butyl 1-methyl pyrrolidinium tris(pentafluoroethyl)trifluorophosphate (BMP-FAP),
- ethyl-(2-methoxyethyl) dimethyl ammonium bis(trifluoromethylsulfonyl)imide,
- 1-methyl 1-propyl piperidinium bis(trifluoromethylsulfonyl)imide.

9. The electrochemical cell as claimed in one of the preceding claims, comprising a lithium salt dissolved in the ionic liquid, which salt is selected from the group consisting of:
- lithium hexafluorophosphate LiPF₆,
- lithium tris(pentafluoroethyl)trifluorophosphate LiFAP,
- lithium bisoxalatoborate LiBOB,
- lithium hexafluoroarsenate LiAsF₆,
- lithium tetrafluoroborate LiBF₄,
- lithium trifluoromethanesulfonate LiCF₃SO₃,
- lithium trifluoromethane sulfonimide LiN(CF₃SO₂)₂ (LiTFSI) and lithium trifluoromethanesulfonemethide LiC(CF₃SO₂)₃ (LiTFSM), preferably LiTFSI.

10. The electrochemical cell as claimed in one of the preceding claims, wherein the negative electrode and/or the positive electrode comprises a current collector which is a metal grid.

11. The electrochemical cell as claimed in claim 10, wherein the grid metal is aluminum or an aluminum-based alloy.

12. The electrochemical cell as claimed in claim 10 or 11, wherein the grid has a thickness less than or equal to 500 µm, preferably less than or equal to 300 µm.

13. The electrochemical cell as claimed in one of claims 1 to 12, comprising at least one positive electrode comprising an active material selected from the group consisting of:
- compound i) of formula LiₓMn_{1-y-z}M'_{y}M"_{z}PO₄ (LMP), where M' and M" are different from each other and are selected from the group consisting of B, Mg, Al, Si, Ca, Ti, V, Cr, Fe, Co, Ni, Cu, Zn, Y, Zr, Nb and Mo, with 0.8≤x≤1.2; 0≤y≤0.6;0≤z≤0.2;
- a compound ii) of formula LiₓFe_{1-y}M_{y}PO₄ (LFMP) where M is selected from the group consisting of B, Mg, Al, Si, Ca, Ti, V, Cr, Mn, Co, Ni, Cu, Zn, Y, Zr, Nb and Mo; and 0.8≤x≤1.2; 0≤y≤0.6,
- a compound iii) of formula LiₓM_{1-y-z-w}M'_{y}M"_{z}M‴_{w}O₂ (LMO2) where M, M', M" and M‴ are selected from the group consisting of B, Mg, Al, Si, Ca, Ti, V, Cr, Mn, Fe, Co, Ni, Cu, Zn, Y, Zr, Nb, W and Mo provided that at least M or M' or M" or M‴ is selected from Mn, Co, Ni, or Fe; M, M', M" and M‴ being different from each other; and 0.8≤x≤1.4; 0≤y≤0.5; 0≤z≤0.5; 0≤w≤0.2 and x+y+z+w<2.1.

14. Use of an electrochemical cell as claimed in one of claims 1 to 13 in charge or discharge at a temperature of 150°C or higher.
